# EUROPÄISCHE PATENTSCHRIFT

(11) **EP 3 658 421 B1**
(45) Veröffentlichungstag und Bekanntmachung des Hinweises auf die Patenterteilung: **05.05.2021**
(21) Anmeldenummer: 18742993.1
(22) Anmeldetag: 16.07.2018
(51) Int. Cl.: B60R 21/272, B60R 21/274

(54) **ÜBERZÜNDSCHUTZVORRICHTUNG, ZWEITE ZÜNDSTUFE, GASGENERATOR SOWIE GASSACKMODUL**
OVERIGNITING PROTECTION DEVICE, SECOND IGNITION STAGE, GAS GENERATOR AND AIRBAG MODULE
SYSTÈME DE PROTECTION CONTRE LE SURALLUMAGE, SECOND ÉTAGE D'ALLUMAGE, GÉNÉRATEUR DE GAZ AINSI QUE MODULE AIRBAG

(30) Priorität: 26.07.2017 DE 102017116868; 16.02.2018 DE 202018100870 U
(43) Veröffentlichungstag der Anmeldung: 03.06.2020
(73) Patentinhaber: ZF Airbag Germany GmbH, 84544 Aschau a. Inn (DE)
(72) Erfinder: EBNER, Johannes, 84453 Mühldorf am Inn (DE); NEUMAYER, Hans-Peter, 84539 Ampfing (DE)
(74) Vertreter: ZF Patentabteilung - DIPS
(86) Internationale Anmeldenummer: PCT/EP2018/069220
(87) Internationale Veröffentlichungsnummer: WO 2019/020414

(56) Entgegenhaltungen:
- FR-A1- 2 888 315
- US-A- 5 582 428
- US-A1- 2007 158 934
- US-B1- 6 382 668
- US-B1- 8 656 838

## Beschreibung

Die Erfindung betrifft eine zweite Zündstufe eines mehrstufigen Gasgenerators sowie einen Gasgenerator. Ferner betrifft die Erfindung ein Gassackmodu. Die US8656838 B1 offenbart eine zweite Zündstufe eines mehrstufigen Gasgenerators nach dem Oberbegriff von Anspruch 1.

Gasgeneratoren kommen in modernen Kraftfahrzeugen in vielfältiger Weise zum Einsatz, um einen Gassack mit einem benötigten Aufblasgas in kürzester Zeit aufzublasen. Hierbei werden unter anderem mehrstufige Gasgeneratoren verwendet, die zumindest zwei Zündstufen umfassen, sodass sich beispielsweise das Aufblasverhalten des Gasgenerators entsprechend einstellen lässt. Beispielsweise zündet nur eine erste Stufe des Gasgenerators, sodass insgesamt weniger Aufblasgas bereitgestellt wird als beim Zünden sämtlicher Zündstufen des mehrstufigen Gasgenerators.

Bei den mehrstufigen Gasgeneratoren kann es sich um sogenannte Hybridgasgeneratoren handeln, die eine pyrotechnische Zündstufe und eine Zündstufe mit Druckgasanteil haben, wobei hier bereits im noch nicht aktivierten Zustand des Hybridgasgenerators ein mit Druckgas vorgespannter Bereich umfasst ist. Auch sind mehrstufige Gasgeneratoren bekannt, die ausschließlich rein pyrotechnische Stufen, also frei von einem Druckgasbereich, umfassen.

Generell muss zur kontrollierten Steuerung der mehrstufigen Gasgeneratoren sichergestellt sein, dass lediglich die gewünschte Anzahl an Zündstufen gezündet wird. Hierzu werden entsprechende Überzündschutzvorrichtungen vorgesehen, die verhindern, dass beim Auslösen der ersten Zündstufe eine weitere Zündstufe ungewollt durch Energieeintrag aus der aktivierten ersten Zündstufe aktiviert wird, beispielsweise durch deren Gase oder heiße Partikel. Die aus dem Stand der Technik bekannten Überzündschutzvorrichtungen sind verhältnismäßig komplex aufgebaut, wodurch die Herstellung der mehrstufigen Gasgeneratoren kompliziert und damit teuer ist.

Die Aufgabe der Erfindung ist es, eine kostengünstige Möglichkeit bereitzustellen, einen mehrstufigen Gasgenerator mit einer funktionierenden Überzündschutzvorrichtung auszubilden.

Die Aufgabe wird erfindungsgemäß gelöst durch eine zweite Zündstufe eines mehrstufigen Gasgenerators, umfassend eine Brennkammer, ein die Brennkammer begrenzendes Brennkammerbegrenzungselement sowie ein Überzündschutzelement, das auf einer von der Brennkammer abgewandten Seite des Brennkammerbegrenzungselements angeordnet ist, wobei das Überzündschutzelement das Brennkammerbegrenzungselement überdeckt, wobei das Überzündschutzelement mit dem Brennkammerbegrenzungselement über einen Befestigungsabschnitt fest verbunden ist und wobei das Überzündschutzelement im Wesentlichen plattenförmig ausgebildet ist, wobei das Brennkammerbegrenzungselement einen radial außen angeordneten Kragen umfasst, mit dem der Befestigungsabschnitt an einer radialen Außenseite des Überzündschutzelements fest verbunden ist.

Des Weiteren wird die Aufgabe erfindungsgemäß gelöst durch einen Gasgenerator mit einer ersten Zündstufe, einer zweiten Zündstufe und einer Überzündschutzvorrichtung, wobei die zweite Zündstufe gemäß der zuvor genannten Art ausgebildet ist.

Zudem wird erfindungsgemäß ein Gassackmodul mit einem Gasgenerator, einem von dem Gasgenerator aufblasbaren Gassack und einer Befestigungseinrichtung zur Anbringung des Gassackmoduls an einem Fahrzeug bereitgestellt, wobei der Gasgenerator einem entsprechenden Gasgenerator der zuvor genannten Art umfasst.

Es kann eine Überzündschutzvorrichtung vorgesehen sein, die ein Überzündschutzelement umfasst, welches eine Brennkammer der zweiten Zündstufe überdeckt bzw. abdichtet, wodurch sichergestellt ist, dass kein Abbrandgas einer anderen Zündstufe bzw. dabei entstehende heiße Partikel die zweite Zündstufe unbeabsichtigt entzünden. Das Überzündschutzelement ist mit dem Brennkammerbegrenzungselement über einen Befestigungsabschnitt fest verbunden, sodass sich das Überzündschutzelement bei Aktivierung der zweiten Zündstufe auch nicht im Bereich des Befestigungsabschnitts vom Brennkammerbegrenzungselement löst. Da das Überzündschutzelement im Wesentlichen plattenförmig ausgebildet ist, ist eine kompakte Anordnung geschaffen, die zudem sicherstellt, dass das Überzündschutzelement beim Auslösen der ersten Zündstufe flächig an dem Brennkammerbegrenzungselement anliegt. Im Wesentlichen plattenförmig bedeutet dabei, dass das Überzündschutzelement im Wesentlichen eine konstante Dicke bzw. Höhe aufweist, also keine Ausbuchtungen oder ähnliches. Die vollständige Überdeckung des Brennkammerbegrenzungselements schafft eine entsprechend große Anlagefläche, nämlich eine maximale Überdeckungsfläche, damit keine heißen Partikel oder Anzündgase einer ersten ausgelösten Zündstufe in das Innere der zweiten Zündstufe gelangen können. Somit ist eine ungewollte Aktivierung der zweiten Zündstufe wirkungsvoll verhindert, wobei das Überzündschutzelement gleichzeitig sicherstellt, dass die zweite Zündstufe, insbesondere die Brennkammer der zweiten Zündstufe, abgedichtet ist.

Es kann bei der zweiten Zündstufe auf weitere Dichtelemente verzichtet werden, wie einer Berstmembran, einer Dichtfolie oder Ähnlichem.

Es kann zwischen der ersten Zündstufe und der zweiten Zündstufe ein Diffusor mit einer Diffusorkammer vorgesehen sein. Dementsprechend wird das über die Zündstufen erzeugte Aufblasgas über den Diffusor in einen Gassack eines Airbagmoduls geleitet, der den Gasgenerator umfasst bzw. an diesem angeschlossen ist.

Die Überzündschutzvorrichtung ist derart ausgebildet, dass sich das Überzündschutzelement im bzw. nach einem Auslösefall des Gasgenerators zumindest teilweise in Richtung der Diffusorkammer erstreckt. Dies bedeutet, dass sich Bereiche des Überzündschutzelements beim Zünden der zugeordneten zweiten Zündstufe in Richtung der Diffusorkammer bewegen, sodass das von der zweiten Zündstufe bereitgestellte Aufblasgas in die Diffusorkammer entweichen kann. Eine derartige teilweise Erstreckung bzw. Bewegung des Überzündschutzelements kann beispielsweise durch ein Umbiegen und/oder bereichsweises Umformen von Abschnitten des Überzündschutzelements erfolgen, welches aufgrund eines sich ausgebildeten entweichenden Innendruck der aktivierten zweiten Zündstufe erzeugbar ist.

Gemäß einer Ausführungsform ist zumindest die zweite Zündstufe eine rein pyrotechnische Zündstufe. Demnach ist in der Brennkammer der zweiten Zündstufe kein Druckgas vor einer Aktivierung der zweiten Zündstufe vorgesehen. Auch die erste Zündstufe kann eine rein pyrotechnische Zündstufe sein, sodass der gesamte mehrstufige Gasgenerator ein rein pyrotechnischer Gasgenerator ist.

Gemäß einer weiteren Ausführungsform ist die erste Zündstufe eine vor einer Aktivierung der ersten Zündstufe druckgasumfassende Zündstufe, sodass der Gasgenerator ein Hybridgasgenerator ist. Demnach umfasst die erste Zündstufe eine Berstscheibe, die beim Zünden der ersten Zündstufe reißt bzw. berstet, wodurch das der ersten Zündstufe zugeordnete vorgespeicherte Druckgas entweicht, um einen dem Gasgenerator zugeordneten Gassack des Gassackmoduls mit aufzublasen.

Bei der bereits weiter oben beschriebenen Überzündschutzvorrichtung kann das Brennkammerbegrenzungselement auch eine Brennkammerscheibe sein.

Weiterhin kann bei der Überzündschutzvorrichtung das Brennkammerbegrenzungselement einen radial außen angeordneten Kragen umfassen, mit dem der Befestigungsabschnitt an einer radialen Außenseite des Überzündschutzelements fest verbunden ist.

Weiterhin kann bei der Überzündschutzvorrichtung das Überzündschutzelement im Bereich des Befestigungsabschnitts an dem Brennkammerbegrenzungselement materialschlüssig befestigt, insbesondere angeschweißt, sein.

Weiterhin kann bei der Überzündschutzvorrichtung das Überzündschutzelement einen Verformungsabschnitt aufweisen, der derart verformbar ist, dass über den Verformungsabschnitt Gas aus der zweiten Zündstufe entweichen kann.

Weiterhin kann bei der Überzündschutzvorrichtung der Verformungsabschnitt mittig an dem Überzündschutzelement angeordnet sein.

Weiterhin kann bei der Überzündschutzvorrichtung der Befestigungsabschnitt vom Verformungsabschnitt, insbesondere nach radial außen, umgeben sein.

Weiterhin bei der Überzündschutzvorrichtung das Überzündschutzelement eine Sollreißstelle oder eine Sollbruchstelle umfassen, über die Gas aus der zweiten Zündstufe entweichen kann.

Weiterhin bei der Überzündschutzvorrichtung das Überzündschutzelement einen umlaufenden, kragenförmigen Rand, insbesondere an seiner radialen Außenseite, aufweisen.

Weiterhin bei der Überzündschutzvorrichtung das Überzündschutzelement eine mittige Vertiefung umfassen.

Weiterhin bei der Überzündschutzvorrichtung das Überzündschutzelement im Wesentlichen scheibenförmig ausgebildet sein.

In einer Ausführungsform der bereits weiter oben beschriebenen erfindungsgemäßen zweiten Zündstufe eines mehrstufigen Gasgenerators kann das Überzündschutzelement Öffnungen im Brennkammerbegrenzungselement überdecken, die ansonsten dichtelementfrei sind.

Weiterhin kann in einer bevorzugten Ausführungsform bei der zweiten Zündstufe das Brennkammerbegrenzungselement eine Brennkammerscheibe sein.

Weiterhin kann in einer bevorzugten Ausführungsform bei der zweiten Zündstufe das Überzündschutzelement im Bereich des Befestigungsabschnitts an das Brennkammerbegrenzungselement angeschweißt sein.

Weiterhin kann in einer bevorzugten Ausführungsform bei der zweiten Zündstufe das Überzündschutzelement einen Verformungsabschnitt aufweisen, der derart verformbar ist, dass über den Verformungsabschnitt Gas aus der zweiten Zündstufe entweichen kann.

Weiterhin kann in einer bevorzugten Ausführungsform bei der zweiten Zündstufe der Verformungsabschnitt mittig an dem Überzündschutzelement angeordnet sein.

Weiterhin kann bei der zweiten Zündstufe der Befestigungsabschnitt vom Verformungsabschnitt, insbesondere nach radial außen, umgeben sein.

Weiterhin kann in einer bevorzugten Ausführungsform bei der zweiten Zündstufe das Überzündschutzelement eine Sollreißstelle oder eine Sollbruchstelle umfassen, über die Gas aus der zweiten Zündstufe entweichen kann.

Weiterhin kann in einer bevorzugten Ausführungsform bei der zweiten Zündstufe das Überzündschutzelement einen umlaufenden, kragenförmigen Rand, insbesondere an seiner radialen Außenseite, aufweisen.

Weiterhin kann in einer bevorzugten Ausführungsform bei der zweiten Zündstufe das Überzündschutzelement eine mittige Vertiefung umfassen.

Weiterhin kann in einer bevorzugten Ausführungsform bei der zweiten Zündstufe das Überzündschutzelement im Wesentlichen scheibenförmig ausgebildet sein.

In einer Ausführungsform des bereits weiter oben beschriebenen erfindungsgemäßen Gasgenerators kann zwischen der ersten Zündstufe und der zweiten Zündstufe ein Diffusor mit einer Diffusorkammer vorgesehen sein.

Weiterhin kann in einer bevorzugten Ausführungsform bei dem Gasgenerator sich das Überzündschutzelement nach einem Auslösefall des Gasgenerators zumindest teilweise in Richtung der Diffusorkammer erstrecken.

Weiterhin kann in einer bevorzugten Ausführungsform bei dem Gasgenerator zumindest die zweite Zündstufe eine rein pyrotechnische Zündstufe sein.

Weiterhin kann in einer bevorzugten Ausführungsform bei dem Gasgenerator die erste Zündstufe eine ein Druckgas umfassende Zündstufe sein, sodass der Gasgenerator ein Hybridgasgenerator ist.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine perspektivische Schnittansicht eines Gasgenerators gemäß einer ersten Ausführungsform im Ausgangszustand,
- Figur 2 den Gasgenerator aus Figur 1 im Funktionsfall,
- Figur 3 eine Draufsicht auf ein Überzündschutzelement, das beim Gasgenerator der Figuren 1 und 2 zum Einsatz kommt,
- Figur 4 eine perspektivische Schnittansicht eines Gasgenerators gemäß einer zweiten Ausführungsform im Ausgangszustand,
- Figur 5 eine Draufsicht auf ein Überzündschutzelement, das beim Gasgenerator gemäß Figur 4 zum Einsatz kommt,
- Figur 6 eine Perspektivansicht des Überzündschutzelements gemäß Figur 5,
- Figur 7 eine perspektivische Schnittansicht eines Gasgenerators gemäß einer dritten Ausführungsform im Ausgangszustand,
- Figur 8 eine Perspektivansicht eines Überzündschutzelements, das beim Gasgenerator gemäß Figur 7 zum Einsatz kommt,
- Figur 9 eine Seitenansicht des Überzündschutzelements gemäß Figur 8,
- Figur 10 eine Schnittansicht des Überzündschutzelements gemäß Figur 9 entlang der Linie A-A,
- Figur 11 eine perspektivische Schnittansicht eines erfindungsgemäßen Gasgenerators gemäß einer ersten Ausführungsform im Ausgangszustand,
- Figur 12 den Gasgenerator gemäß Figur 11 im Funktionsfall,
- Figur 13 eine Draufsicht auf ein Überzündschutzelement, das beim Gasgenerator der Figuren 11 und 12 zum Einsatz kommt,
- Figur 14 eine perspektivische Schnittansicht eines erfindungsgemäßen Gasgenerators gemäß einer zweiten Ausführungsform im Ausgangszustand,
- Figur 15 eine Draufsicht auf ein Überzündschutzelement, das beim Gasgenerator gemäß Figur 14 zum Einsatz kommt,
- Figur 16 eine perspektivische Schnittansicht eines erfindungsgemäßen Gasgenerators gemäß einer dritten Ausführungsform im Ausgangszustand, und
- Figur 17 eine Draufsicht auf ein Überzündschutzelement, das beim Gasgenerator gemäß Figur 16 zum Einsatz kommt.

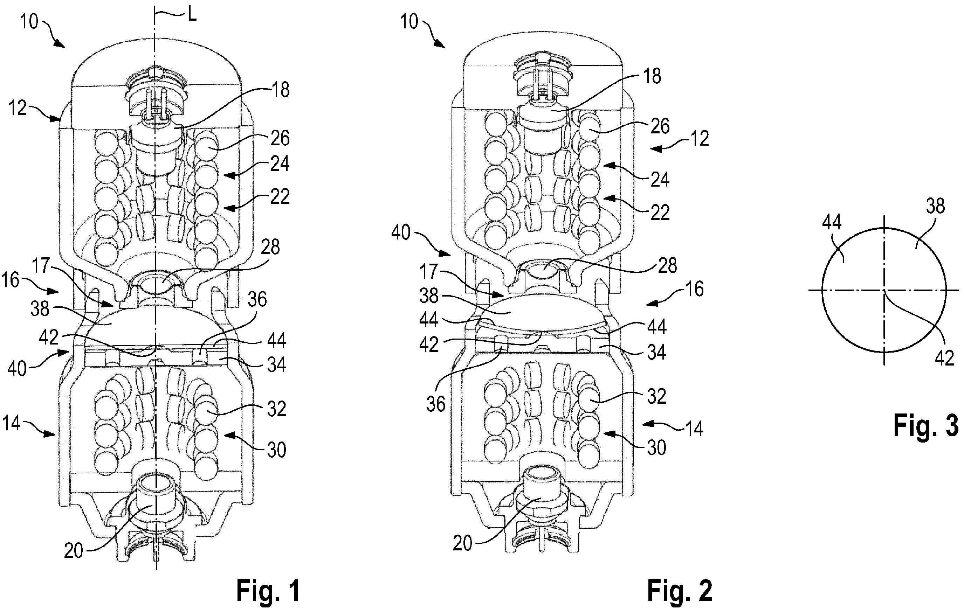

In Figur 1 ist ein Gasgenerator 10 gezeigt, der eine erste Zündstufe 12 und eine zweite Zündstufe 14 umfasst, die jeweils mit einem Diffusor 16 gekoppelt sind, der eine Diffusorkammer 17 aufweist. Der Diffusor 16 ist längsaxial, also entlang der Längsachse L des Gasgenerators 10, zwischen den beiden Zündstufen 12, 14 angeordnet.

Die beiden Zündstufen 12, 14 umfassen jeweils einen Zünder 18, 20, die jeweils elektrisch aktivierbar sind, wobei sie entsprechende Kontaktstifte aufweisen.

In der gezeigten Ausführungsform umfasst die erste Zündstufe 12 eine erste Brennkammer 22, in der ein Druckgas 24 sowie ein Treibstoff 26 angeordnet sind. Der Treibstoff 26 kann eine Schüttung einzelner Treibstoffkörper, wie z.B. gepresste Treibstofftabletten oder extrudierte Körper umfassen, aber auch in Form eines monolithischen Formkörpers oder in Form von aneinandergereihten Scheiben bzw. Ringen vorliegen.

Die erste Druckkammer 22 ist dabei von einem Gehäuseabschnitt der ersten Zündstufe 12 umgeben, wobei sie axial vom Zünder 18 und zudem über eine Berstmembran 28 abgeschlossen ist, die im Übergangsbereich zum Diffusor 16 vorgesehen ist.

Die zweite Zündstufe 14 umfasst eine zweite Brennkammer 30, in der lediglich ein pyrotechnischer Treibstoff 32 angeordnet ist, womit also kein vorgespeichertes Druckgas im Ruhezustand bzw. nicht aktivierten Ausgangszustand des Gasgenerators in der zweiten Brennkammer 30 aufgenommen ist.

Insofern handelt es sich bei der zweiten Zündstufe 14 um eine rein pyrotechnische Zündstufe, sodass der Gasgenerator 10 aufgrund der Druckgas umfassenden ersten Zündstufe 12 als ein Hybridgasgenerator ausgebildet ist.

Alternativ kann auch die erste Zündstufe 12 eine rein pyrotechnische Zündstufe sein, sodass der gesamte Gasgenerator 10 als ein rein pyrotechnischer Gasgenerator ausgebildet ist, welcher kein vorgespeichertes Druckgas in seinem Ruhezustand bzw. nicht aktivierten Ausgangszustand umfasst.

Die zweite Brennkammer 30 ist durch ein Brennkammerbegrenzungselement 34 zum Diffusor 16 hin begrenzt, wobei das Brennkammerbegrenzungselement 34 als eine Brennkammerscheibe ausgebildet ist.

Im Brennkammerbegrenzungselement 34 sind mehrere Öffnungen 36 vorgesehen, die zur zweiten Brennkammer 32 über eine an der der Brennkammer 32 zugewandten Seite des Brennkammerbegrenzungselements 34 angebrachte Dichtfolie oder ähnlichem verschlossen sein können, wie in der Figur 1 dargestellt.

Auf der zum Diffusor 16 gerichteten Seite des Brennkammerbegrenzungselements 34 ist ein Überzündschutzelement 38 angeordnet, welches das Brennkammerbegrenzungselement 34 vollständig überdeckt, also auch die Öffnungen 36 vollständig überdeckt, und zudem plattenförmig ausgebildet ist.

Das Überzündschutzelement 38 ist in Figur 3 in einer Draufsicht näher gezeigt. Hieraus geht hervor, dass es sich bei dem Überzündschutzelement 38 ebenfalls um eine Scheibe handelt, die im Wesentlichen den gleichen Außendurchmesser wie die Brennkammerscheibe hat, sodass sie diese im Wesentlichen vollständig bedeckt.

Zudem ist das Überzündschutzelement 38 unterbrechungsfrei, also ohne Öffnungen, Ausnehmungen oder ähnlichem, ausgebildet, weswegen es besonders stabil ist.

Die Öffnungen 36 zur zweiten Brennkammer 32 hin können aufgrund des Überzündschutzelements 38 auch offen sein, also dichtelementfrei.

Sofern die erste Zündstufe 12 aktiviert wird, reißt die Berstscheibe 28 bzw. wird diese bestimmungsgemäß geöffnet, sodass das Druckgas 24 und ein entsprechendes Abbrandgas des Treibstoffs 26 über den Diffusor 16 bestimmungsgemäß, hin zu einem nicht dargestellten aufzublasenden Gassack, entweichen kann. Das Überzündschutzelement 38 stellt dabei sicher, dass weder heiße Partikel noch Gase von der ersten Zündstufe 12 über die Öffnung 36 in die zweite Brennkammer 30 eintreten können, um den dort vorgesehenen Treibstoff 32 der zweiten Zündstufe 14 nicht ungewollt zu entzünden.

Insofern ist eine wirksame Überzündschutzvorrichtung 40 geschaffen.

Vielmehr können die Abbrandgase der ersten Zündstufe 12 bzw. ein optionales Druckgas nicht nur nicht in die zweite Brennkammer 30 einströmen, sondern der von den Abbrandgasen bzw. dem Druckgas ausgehende Druck auf das Überzündschutzelement 38 verbessert zusätzlich die Überzündschutzvorrichtung 40, da das Überzündschutzelement 38 stärker auf das Brennkammerbegrenzungselement 34 gedrückt wird und die Öffnungen 36 weiter bzw. noch effektiver abdichtet.

In Figur 2 ist der Gasgenerator 10 gemäß der ersten Ausführungsform im Funktionsfall gezeigt, also bei bzw. nach Auslösung der zweiten Zündstufe 14.

Ein Vergleich der Figuren 1 und 2 verdeutlicht, dass das Überzündschutzelement 38 einen Befestigungsabschnitt 42 aufweist, mit dem das Überzündschutzelement 38 fest mit dem Brennkammerbegrenzungselement 34 verbunden ist, also auch im Funktionsfall wie aus Figur 2 hervorgeht.

Beispielsweise ist das Überzündschutzelement 38 mit dem Brennkammerbegrenzungselement 34 im Bereich des Befestigungsabschnitts 42 verschweißt, wodurch sichergestellt ist, dass sich das Überzündschutzelement 38 auch im Aktivierungsfall der zweiten Zündstufe 14 nicht vom Brennkammerbegrenzungselement 34 löst.

Im Bereich der Öffnungen 36 des Brennkammerbegrenzungselements 34 weist das Überzündschutzelement 38 dagegen einen Verformungsabschnitt 44 auf, der durch die Aktivierung der zweiten Zündstufe 14 in die Diffusorkammer 17 des Diffusors 16 verformt wird, sodass das entstehende Aufblasgas der zweiten Zündstufe 14 über den Verformungsabschnitt 44 und den Diffusor 16 entweichen kann, um einen hier nicht dargestellten Gassack aufzublasen.

Der Verformungsabschnitt 44 ist vorliegend ein Ring, da sich das Überzündschutzelement 38 über seinen radial äußeren Bereich verformt, sofern die zweite Zündstufe 14 aktiviert ist und Gas aus der zweiten Zündstufe über die Öffnungen 36 hin in die Diffusorkammer 17 abströmt bzw. abgeströmt ist.

In der gezeigten Ausführungsform ist der Befestigungsabschnitt 42, der mittig angeordnet ist, demnach vom Verformungsabschnitt 44 radial umgeben, wodurch sich das Überzündschutzelement 38 im Funktionsfall an seinem radial außenliegenden Rand in die Diffusorkammer 17 hinein erstreckt, um ein Ausströmen des Aufblasgases zu ermöglichen.

Hierbei entsteht ein gewisser Abstand zwischen der Oberseite des Brennkammerbegrenzungselements 34, also der zum Diffusor 16 hin gerichteten Seite des Brennkammerbegrenzungselements 34, sowie der gegenüberliegenden Seite des Überzündschutzelements 38. Dieser Abstand kann auch als ein Überströmspalt für das Aufblasgas angesehen werden.

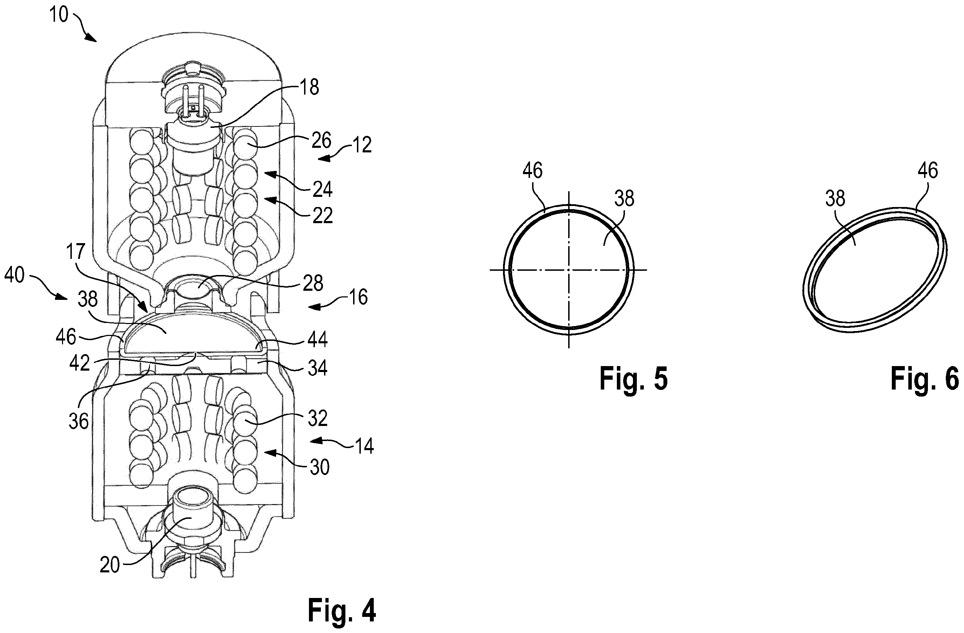

In Figur 4 ist eine zweite Ausführungsform des Gasgenerators 10 gezeigt, die sich von der ersten Ausführungsform in der Ausgestaltung des Überzündschutzelements 38 unterscheidet, wie auch aus den Figuren 5 und 6 hervorgeht.

In der gezeigten Ausführungsform weist das Überzündschutzelement 38 zusätzlich zur ersten Ausführungsform gemäß Figuren 1 bis 3 einen radial außenliegenden, umlaufenden Rand 46 auf, der zudem kragenförmig ausgebildet ist. Hierdurch ergibt sich eine entsprechend bessere Überzündschutzvorrichtung 40, sofern nur die erste Zündstufe 12 aktiviert worden ist. Der kragenförmige Rand 46 legt sich über seinen axial hochstehenden Abschnitt nämlich radial an das Gehäuse der zweiten Zündstufe 14 bzw. in einem Übergangsbereich der zweiten Zündstufe 14 hin zu dem Diffusor 16 an, sodass eine größere Anlagefläche bzw. optimierte abdichtende Anlagefläche geschaffen ist.

Generell überdeckt das Überzündschutzelement 38 gemäß dieser Ausführungsform das Brennkammerbegrenzungselement 34 vollständig, wobei es zudem im Wesentlichen plattenförmig ausgebildet ist.

Beim Auslösen der ersten Zündstufe 12 wird der Rand 46 dann noch stärker gegen das entsprechende Gehäuse gedrückt.

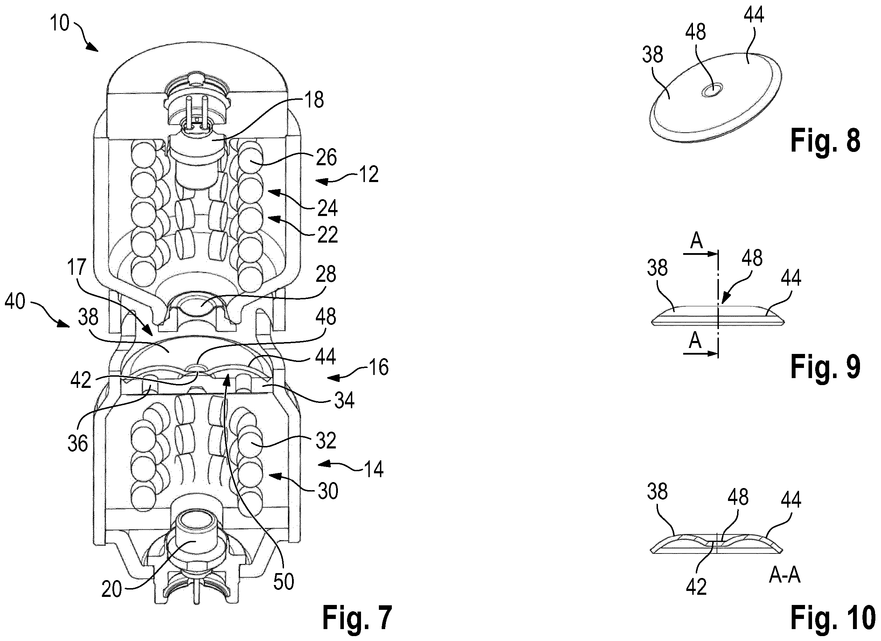

In der Figur 7 ist eine dritte Ausführungsform des Gasgenerators 10 gezeigt, die sich von den ersten beiden Ausführungsformen durch die Ausbildung des Überzündschutzelements 38 unterscheidet.

Wie aus den Figuren 8 bis 10 hervorgeht, weist das Überzündschutzelement 38 eine mittige Vertiefung 48 auf, die gleichzeitig den Befestigungsabschnitt 42 darstellt. Von der mittigen Vertiefung 48 ausgehend ergibt sich jeweils nach radial außen ein teilbogenförmiger Abschnitt, sodass zwischen den Öffnungen 34 und der zugeordneten Seite des Überzündschutzelements 38 ein Hohlraum 50 entsteht, in dem sich das Aufblasgas aus der zweiten Zündstufe 14 bei Aktivierung der zweiten Zündstufe 14 zunächst sammeln kann. Hierdurch wird ein anderes Aufblasverhalten bzw. Ausströmverhalten der zweiten Zündstufe 14 sichergestellt.

Das Überzündschutzelement 38 gemäß dieser Ausführungsform ist demnach nicht plattenförmig ausgebildet. Es erstreckt sich jedoch über das gesamte Brennkammerbegrenzungselement 34, sodass dieses vollständig überdeckt ist, da der radial äußere Rand am Gehäuse der zweiten Zündstufe 14 anliegt.

Der Verformungsabschnitt 44 ist, wie bei der zweiten Ausführungsform auch, wieder durch den radial äußeren Bereich des Überzündschutzelements 38 gebildet, welches sich beim Zünden der zweiten Zündstufe 14 in die bzw. in Richtung der Diffusorkammer 17 verformt.

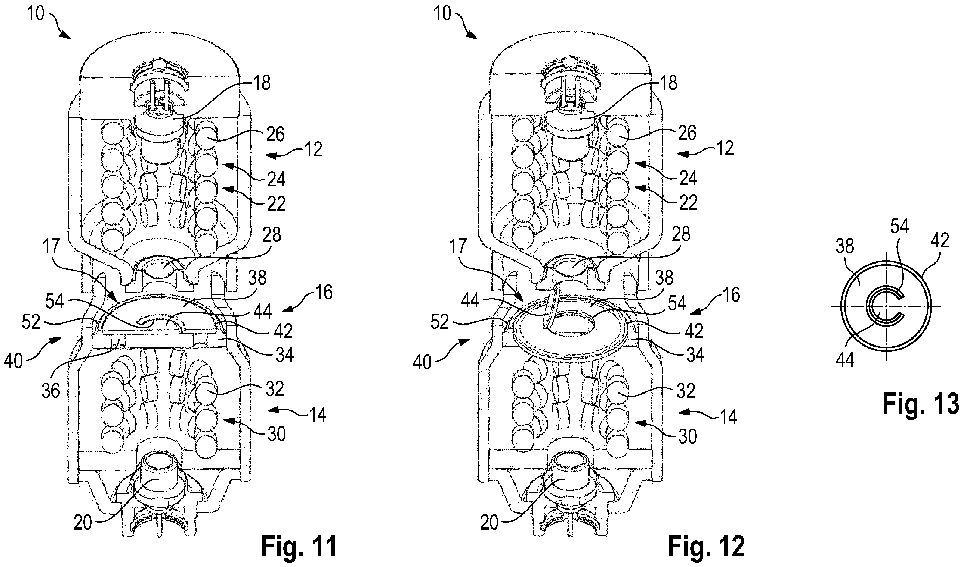

In der in Figur 11 gezeigten ersten Ausführungsform des erfindungsgemäßen Gasgenerators 10 umfasst die Überzündschutzvorrichtung 40 ein Überzündschutzelement 38, welches einen radial außenseitig angeordneten Befestigungsabschnitt 42 umfasst.

In der gezeigten Ausführungsform weist das Brennkammerbegrenzungselement 34 einen Kragen 52 auf, mit dem das Überzündschutzelement 38 über seinen Befestigungsabschnitt 42 in Umfangsrichtung gekoppelt sein kann. Hierbei ist das Überzündschutzelement 38 an seiner radial umlaufenden Außenseite bzw. Außenseitenwandung fest mit dem Kragen 52 verbunden, insbesondere verschweißt, und kann auch an einem radial umlaufenden Außenbereich seiner Stirnseite, welche zu dem Brennkammerbegrenzungselement 34 hinweisend gerichtet ist, radial umlaufend mit dem Brennkammerbegrenzungselement 34 entsprechend fest verbunden, insbesondere verschweißt, sein.

Das Überzündschutzelement 38 ist plattenförmig ausgebildet, wobei es gleichzeitig die von der zweiten Brennkammer 30 abgewandte Seite des Brennkammerbegrenzungselements 34 vollständig überdeckt, die vom Kragen 52 umgeben ist.

Des Weiteren umfasst das Überzündschutzelement 38 Sollreißstellen bzw. Sollbruchstellen 54 auf seiner zu dem Diffusorraum 17 hin gerichteten Stirnfläche, an denen das Überzündschutzelement 38 im Auslösefall der zweiten Zündstufe 14 reißt bzw. bricht. Dies geht anschaulich aus der Figur 12 hervor, in der der Funktionsfall bei bzw. nach einer Aktivierung der zweiten Zündstufe 14 gezeigt ist.

Hieraus ist zu entnehmen, dass der durch die Sollreißstellen bzw. Sollbruchstellen 54 radial einwärts umgrenzte Bereich noch mit dem Befestigungsabschnitt 42 gekoppelt bleibt, weswegen dieser Bereich als Verformungsabschnitt 44 angesehen werden kann, der sich in die Diffusorkammer 17 erstreckt.

Die Sollreiß- bzw. Sollbruchstellen 54 sind dabei nicht als materialdurchgängige Stellen, sondern als Schwächungszonen mit einer geringeren Restwandstärke im Überzündschutzelement 38 ausgebildet. In der gezeigten Ausführungsform ist ein mittiger, im Wesentlichen teilkreisförmiger Bereich als Sollreiß- bzw. Sollbruchstelle 54 ausgebildet, die auch als eine Aneinanderreihung von mehreren Sollreißstellen bzw. Sollbruchstellen 54 in Form einer "C"-förmigen Kurve aufgefasst werden kann, wie insbesondere aus der Figur 13 hervorgeht.

Über die Form der Sollreiß- bzw. Sollbruchstelle 54 und deren Materialtiefe bzw. Restwandstärke lässt sich das Ausströmverhalten des Gases von der zweiten Zündstufe 14 in den Diffusorraum 17 bzw. weiter in die Umgebung des Gasgenerators 10 einstellen.

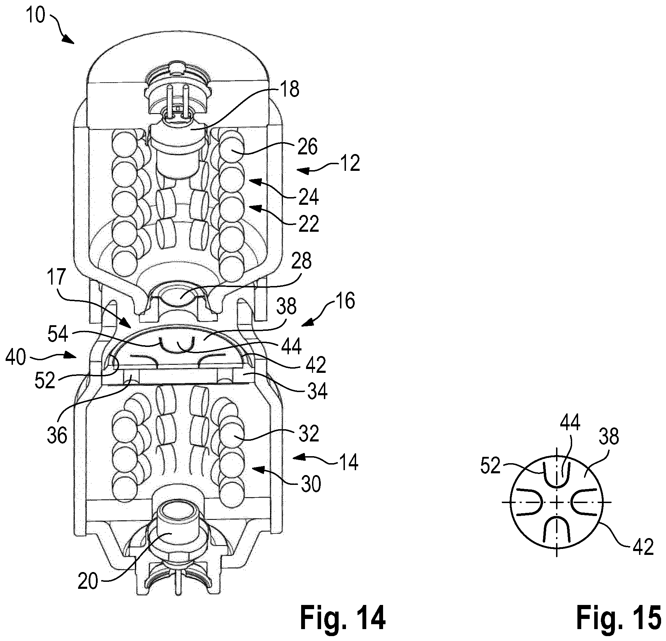

In der in Figur 14 dargestellten Ausführungsform des Gasgenerators 10, die im Wesentlichen derjenigen der Figur 11 entspricht, sind ebenfalls mehrere voneinander beabstandete Sollreiß- bzw. Sollbruchstellen 54 vorgesehen, die vier voneinander getrennte Verformungsabschnitte 44 definiert, welche sich im Auslösefall der zweiten Zündstufe 14 in die Diffusorkammer 17 erstrecken um die jeweiligen Öffnungen 36 im Brennkammerbegrenzungselement 34 freizugeben, sodass eine Strömungsverbindung zwischen der zweiten Brennkammer 30 und dem Diffusor 16 vorliegt bzw. geschaffen wird.

Wie aus Figur 15 hervorgeht, handelt es sich dabei um klappenförmige bzw. im Wesentlichen "U"-förmige Verformungsabschnitte 44 des Überzündschutzelements 38, die ein entsprechend definiertes Ausströmverhalten zur Folge haben.

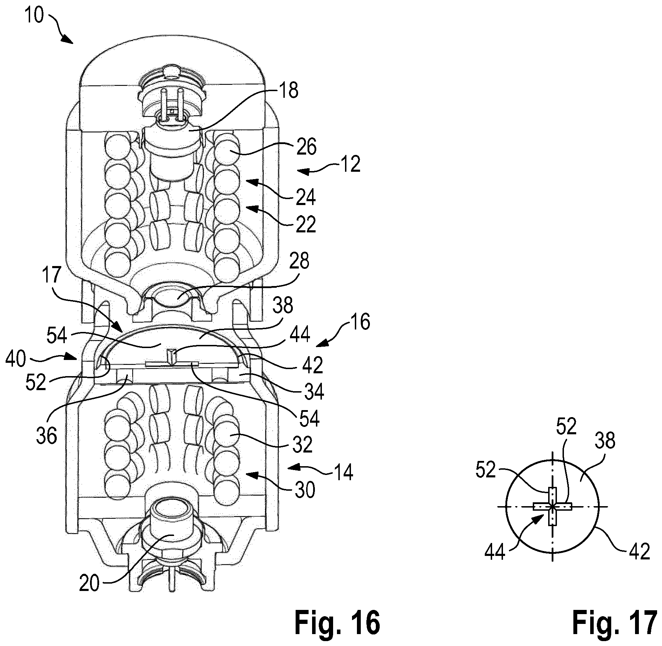

In Figur 16 ist eine weitere Ausführungsform des erfindungsgemäßen Gasgenerators 10 gezeigt, der im Wesentlichen wie derjenige der Figuren 11 und 14 ausgebildet ist.

Die Überzündschutzvorrichtung 40 hat in ihrem Überzündschutzelement 38 mittig angeordnete Sollreiß- bzw. Sollbruchstellen 54, die zusammen eine im Wesentliche kreuzförmige Gestalt aufweisen und einen im Wesentlichen kreuzförmigen Verformungsabschnitt 44 ergeben, wenn die zweite Zündstufe 14 auslöst.

Bei den erfindungsgemäßen Ausführungsformen der Figuren 11 bis 17 umfasst das Überzündschutzelement 38 also eine bzw. mehrere Sollreiß- bzw. Sollbruchstellen 54, wobei die im Wesentlichen mittig angeordnet sind, wobei der Befestigungsabschnitt 42 radial außen vorgesehen ist. Beispielsweise ist das Überzündschutzelement 38 jeweils über den Befestigungsabschnitt 42 mit dem Kragen 52 des Brennkammerbegrenzungselements 34 fest verbunden.

Der Gasgenerator 10 kann Teil eines Gassackmoduls sein, das zudem einen Gassack umfasst, der vom Aufblasgas des Gasgenerators 10 aufgeblasen wird.

## Patentansprüche

1. Zweite Zündstufe (14) eines mehrstufigen Gasgenerators (10), umfassend eine Brennkammer (30), ein die Brennkammer (30) begrenzendes Brennkammerbegrenzungselement (34) sowie ein Überzündschutzelement (38), das auf einer von der Brennkammer (30) abgewandten Seite des Brennkammerbegrenzungselements (34) angeordnet ist, wobei das Überzündschutzelement (38) das Brennkammerbegrenzungselement (34) überdeckt, wobei das Überzündschutzelement (38) mit dem Brennkammerbegrenzungselement (34) über einen Befestigungsabschnitt (42) fest verbunden ist und wobei das Überzündschutzelement (38) im Wesentlichen plattenförmig ausgebildet ist, **dadurch gekennzeichnet, dass** das Brennkammerbegrenzungselement (34) einen radial außen angeordneten Kragen (52) umfasst, mit dem der Befestigungsabschnitt (42) an einer radialen Außenseite des Überzündschutzelements (38) fest verbunden ist.

2. Zweite Zündstufe (14) nach Anspruch 1, **dadurch gekennzeichnet, dass** das Überzündschutzelement (38) Öffnungen (36) im Brennkammerbegrenzungselement (34) überdeckt, die ansonsten dichtelementfrei sind.

3. Zweite Zündstufe (14) nach Anspruch 1 oder 2, **dadurch gekennzeichnet. dass** das Brennkammerbegrenzungselement (34) eine Brennkammerscheibe ist.

4. Zweite Zündstufe (14) nach einem der Ansprüche 1 bis 3, **dadurch gekennzeichnet, dass** das Überzündschutzelement (38) im Bereich des Befestigungsabschnitts (42) an das Brennkammerbegrenzungselement (34) angeschweißt ist.

5. Zweite Zündstufe (14) nach einem der Ansprüche 1 bis 4, **dadurch gekennzeichnet, dass** das Überzündschutzelement (38) einen Verformungsabschnitt (44) aufweist, der derart verformbar ist, dass über den Verformungsabschnitt (44) Gas aus der zweiten Zündstufe (14) entweichen kann.

6. Zweite Zündstufe (14) nach Anspruch 5, **dadurch gekennzeichnet, dass** der Verformungsabschnitt (44) mittig an dem Überzündschutzelement (38) angeordnet ist.

7. Zweite Zündstufe (14) nach einem der Ansprüche 1 bis 6, **dadurch gekennzeichnet, dass** das Überzündschutzelement (38) eine Sollreißstelle oder eine Sollbruchstelle (54) umfasst, über die Gas aus der zweiten Zündstufe (14) entweichen kann.

8. Zweite Zündstufe (14) nach einem der Ansprüche 1 bis 7, **dadurch gekennzeichnet, dass** das Überzündschutzelement (38) einen umlaufenden, kragenförmigen Rand (46), insbesondere an seiner radialen Außenseite, aufweist.

9. Zweite Zündstufe (14) nach einem der Ansprüche 1 bis 8, **dadurch gekennzeichnet, dass** das Überzündschutzelement (38) eine mittige Vertiefung (48) umfasst.

10. Zweite Zündstufe (14) nach einem der Ansprüche 1 bis 8, **dadurch gekennzeichnet, dass** das Überzündschutzelement (38) im Wesentlichen scheibenförmig ausgebildet ist.

11. Gasgenerator (10) mit einer ersten Zündstufe (12), einer zweiten Zündstufe (14) und einer Überzündschutzvorrichtung (40), wobei die zweite Zündstufe (14) nach einem der Ansprüche 1 bis 10 ausgebildet ist.

12. Gasgenerator (10) nach Anspruch 11, **dadurch gekennzeichnet, dass** zwischen der ersten Zündstufe (12) und der zweiten Zündstufe (14) ein Diffusor (16) mit einer Diffusorkammer (17) vorgesehen ist.

13. Gasgenerator nach Anspruch 12, **dadurch gekennzeichnet, dass** sich das Überzündschutzelement (38) nach einem Auslösefall des Gasgenerators (10) zumindest teilweise in Richtung der Diffusorkammer (17) erstreckt.

14. Gasgenerator (10) nach einem der Ansprüche 11 bis 13, **dadurch gekennzeichnet, dass** zumindest die zweite Zündstufe (14) eine rein pyrotechnische Zündstufe ist.

15. Gasgenerator (10) nach einem der Ansprüche 11 bis 14, **dadurch gekennzeichnet, dass** die erste Zündstufe (12) eine ein Druckgas umfassende Zündstufe ist, sodass der Gasgenerator (10) ein Hybridgasgenerator ist.

16. Gassackmodul mit einem Gasgenerator (10), einem von dem Gasgenerator (10) aufblasbaren Gassack und einer Befestigungseinrichtung zur Anbringung des Gassackmoduls an einem Fahrzeug, **dadurch gekennzeichnet, dass** der Gasgenerator (10) nach zumindest einem der Ansprüche 11 bis 15 ausgebildet ist.

## Claims

1. A second ignition stage (14) of a multi-stage gas generator (10) comprising a combustion chamber (30), a combustion chamber limiting element (34) for limiting the combustion chamber (30) as well as an overigniting protection element (38) which is arranged on a side of the combustion chamber limiting element (34) remote from the combustion chamber (30), wherein the overigniting protection element (38) covers the combustion chamber limiting element (34), wherein the overigniting protection element (38) is tightly connected to the combustion chamber limiting element (34) via a mounting portion (42) and wherein the overigniting protection element (38) is substantially plate-shaped, **characterized in that** the combustion chamber limiting element (34) comprises a collar (52) arranged radially outside to which the mounting portion (42) is tightly connected at a radial outer face of the overigniting protection element (38).

2. The second ignition stage (14) according to claim 1, **characterized in that** the overigniting protection element (38) covers openings (36) in the combustion chamber limiting element (34) which are otherwise free from sealing elements.

3. The second ignition stage (14) according to claim 1 or 2, **characterized in that** the combustion chamber limiting element (34) is a combustion chamber disk.

4. The second ignition stage (14) according to any one of the claims 1 to 3, **characterized in that** the overigniting protection element (38) is welded to the combustion chamber limiting element (34) in the area of the mounting portion (42).

5. The second ignition stage (14) according to any one of the claims 1 to 4, **characterized in that** the overigniting protection element (38) comprises a deforming portion (44) which is deformable such that gas can escape from the second ignition stage (14) via the deforming portion (44).

6. The second ignition stage (14) according to claim 5, **characterized in that** the deforming portion (44) is arranged centrally on the overigniting protection element (38).

7. The second ignition stage (14) according to any one of the claims 1 to 6, **characterized in that** the overigniting protection element (38) comprises a predetermined rupturing point or a predetermined breaking point (54) via which gas can escape from the second ignition stage (14).

8. The second ignition stage (14) according to any one of the claims 1 to 7, **characterized in that** the overigniting protection element (38) comprises a peripheral collar-shaped edge (46) especially at its radial outer face.

9. The second ignition stage (14) according to any one of the claims 1 to 8, **characterized in that** the overigniting protection element (38) comprises a central recess (48).

10. The second ignition stage (14) according to any one of the claims 1 to 8, **characterized in that** the overigniting protection element (38) is substantially disk-shaped.

11. A gas generator (10) comprising a first ignition stage (12), a second ignition stage (14) and an overigniting protection device (40), the second ignition stage (14) being configured according to any one of the claims 1 to 10.

12. The gas generator (10) according to claim 11, **characterized in that** between the first ignition stage (12) and the second ignition stage (14) a diffusor (16) including a diffusor chamber (17) is provided.

13. The gas generator according to claim 12, **characterized in that**, after a case of release of the gas generator (10), the overigniting protection element (38) extends, at least partly, in the direction of the diffusor chamber (17).

14. The gas generator (10) according to any one of the claims 11 to 13, **characterized in that** at least the second ignition stage (14) is a purely pyrotechnical ignition stage.

15. The gas generator (10) according to any one of the claims 11 to 14, **characterized in that** the first ignition stage (12) is an ignition stage comprising compressed gas so that the gas generator (10) is a hybrid gas generator.

16. An airbag module comprising a gas generator (10), an airbag inflatable by the gas generator (10) and a mounting unit for attaching the airbag module to a vehicle, **characterized in that** the gas generator (10) is configured according to at least one of the claims 11 to 15.

## Revendications

1. Deuxième étage d'allumage (14) d'un générateur de gaz à plusieurs étages (10), comprenant une chambre de combustion (30), un élément de délimitation de la chambre de combustion (34) délimitant la chambre de combustion (30), ainsi qu'un élément de protection contre l'allumage par sympathie (38) qui est disposé sur un côté de l'élément de délimitation de la chambre de combustion (34) opposé à la chambre de combustion (30), l'élément de protection contre l'allumage par sympathie (38) recouvrant l'élément de délimitation de la chambre de combustion (34), pour lequel l'élément de protection contre l'allumage par sympathie (38) est relié de manière fixe à l'élément de délimitation de la chambre de combustion (34) par l'intermédiaire d'une partie de fixation (42), et pour lequel l'élément de protection contre l'allumage par sympathie (38) est conçu essentiellement en forme de plaque, **caractérisé en ce que** l'élément de délimitation de la chambre de combustion (34) comprend un collet (52) qui est disposé radialement à l'extérieur et avec lequel la partie de fixation (42) est reliée de manière fixe sur un côté extérieur radial de l'élément de protection contre l'allumage par sympathie (38).

2. Deuxième étage d'allumage (14) selon la revendication 1, **caractérisé en ce que** l'élément de protection contre l'allumage par sympathie (38) couvre des ouvertures (36) dans l'élément de délimitation de la chambre de combustion (34) qui sont par ailleurs exemptes d'éléments d'étanchéité.

3. Deuxième étage d'allumage (14) selon la revendication 1 ou 2, **caractérisé en ce que** l'élément de limitation de la chambre de combustion (34) est un disque de chambre de combustion.

4. Deuxième étage d'allumage (14) selon l'une des revendications 1 à 3, **caractérisé en ce que** l'élément de protection contre l'allumage (38) est soudé à l'élément de limitation de la chambre de combustion (34) dans la zone de la partie de fixation (42).

5. Deuxième étage d'allumage (14) selon l'une quelconque des revendications 1 à 4, **caractérisé en ce que** l'élément de protection contre l'allumage par sympathie (38) présente une section de déformation (44) qui est déformable de telle sorte que du gaz peut s'échapper du deuxième étage d'allumage (14) par la section de déformation (44).

6. Deuxième étage d'allumage (14) selon la revendication 5, **caractérisé en ce que** la section de déformation (44) est disposée de manière centrale sur l'élément de protection contre l'allumage par sympathie (38).

7. Deuxième étage d'allumage (14) selon l'une quelconque des revendications 1 à 6, **caractérisé en ce que** l'élément de protection contre l'allumage par sympathie (38) comprend un point de déchirure prédéterminé ou un point de rupture prédéterminé (54), par lequel du gaz peut s'échapper du deuxième étage d'allumage (14).

8. Deuxième étage d'allumage (14) selon l'une des revendications 1 à 7, **caractérisé en ce que** l'élément de protection contre l'allumage par sympathie (38) présente un bord périphérique en forme de collet (46), en particulier sur son côté extérieur radial.

9. Deuxième étage d'allumage (14) selon l'une quelconque des revendications 1 à 8, **caractérisé en ce que** l'élément de protection contre l'allumage par sympathie (38) comprend une dépression centrale (48).

10. Deuxième étage d'allumage (14) selon l'une quelconque des revendications 1 à 8, **caractérisé en ce que** l'élément de protection contre l'allumage par sympathie (38) est sensiblement en forme de disque.

11. Générateur de gaz (10) comprenant un premier étage d'allumage (12), un deuxième étage d'allumage (14) et un dispositif de protection contre l'allumage par sympathie (40), pour lequel le deuxième étage d'allumage (14) est formé selon l'une quelconque des revendications 1 à 10.

12. Générateur de gaz (10) selon la revendication 11, **caractérisé en ce qu'**un diffuseur (16) avec une chambre de diffusion (17) est prévu entre le premier étage d'allumage (12) et le deuxième étage d'allumage (14).

13. Générateur de gaz selon la revendication 12, **caractérisé en ce que** l'élément de protection contre l'allumage par sympathie (38) s'étend au moins partiellement en direction de la chambre de diffusion (17) après un événement de déclenchement du générateur de gaz (10).

14. Générateur de gaz (10) selon l'une quelconque des revendications 11 à 13, **caractérisé en ce qu'**au moins le deuxième étage d'allumage (14) est un étage d'allumage purement pyrotechnique.

15. Générateur de gaz (10) selon l'une quelconque des revendications 11 à 14, **caractérisé en ce que** le premier étage d'allumage (12) est un étage d'allumage comprenant un gaz comprimé, de sorte que le générateur de gaz (10) est un générateur de gaz hybride.

16. Module airbag comprenant un générateur de gaz (10), un coussin gonflable qui peut être gonflé par le générateur de gaz (10) et un dispositif de fixation pour fixer le module airbag sur un véhicule, **caractérisé en ce que** le générateur de gaz (10) est formé selon au moins une des revendications 11 à 15.
